# EUROPÄISCHE PATENTSCHRIFT

(11) **EP 4 435 299 B1**
(45) Veröffentlichungstag und Bekanntmachung des Hinweises auf die Patenterteilung: **06.05.2026**
(21) Anmeldenummer: 23162971.8
(22) Anmeldetag: 20.03.2023
(51) Int. Cl.: F16J 15/322, F16D 11/14, F16D 43/14

(54) **FIXIEREINRICHTUNG FÜR EINEN WELLENDICHTRING UND GETRIEBEEINRICHTUNG MIT EINER SOLCHEN**
FIXING DEVICE FOR A SHAFT SEAL RING AND TRANSMISSION DEVICE WITH SAME
DISPOSITIF DE FIXATION POUR UNE BAGUE D'ÉTANCHÉITÉ D'ARBRE ET DISPOSITIF DE TRANSMISSION DOTÉ D'UN TEL DISPOSITIF DE FIXATION

(43) Veröffentlichungstag der Anmeldung: 25.09.2024
(73) Patentinhaber: Deere & Company, Moline, IL 61265 (US)
(72) Erfinder: PEREZ, Javier Jose, 68163 Mannheim (DE); JUNDALE, Prashnat M, 68163 Mannheim (DE); GANDHI, Pratik P, 68163 Mannheim (DE)
(74) Vertreter: Reichert, Christian

(56) Entgegenhaltungen:
- DE-A1- 102012 107 382
- DE-A1- 102013 217 397
- DE-A1- 102015 103 921
- DE-A1- 2 145 783

## Beschreibung

Die Erfindung betrifft eine Getriebeeinrichtung mit einem ersten um eine Rotationsachse rotierbaren Getriebeteil, einem im ersten Getriebeteil ausgeformten Dichtungssitz, einem in dem Dichtungssitz eingepassten Wellendichtring und einem sich durch den ersten Getriebeteil und den Wellendichtring erstreckenden und um die Rotationsachse rotierbaren zweiten Getriebeteil, wobei am Wellendichtring eine Dichtlippe ausgebildet ist, die mit einer Außenfläche des zweiten Getriebeteils in Eingriff steht und durch ein am Wellendichtring angeordnetes Federelement vorgespannt ist, wobei eine Fixiereinrichtung für den Wellendichtring vorgesehen ist.

Wellendurchführungen an Getriebegehäusen mit Wellendichtungen sind bekannt, wobei die Wellendichtungen eingesetzt werden, um ein Austreten von Ölen, Schmierstoffen oder Fetten und gleichzeitig das Eindringen von Staub, Schmutz und dergleichen von außen in das Innere des Getriebes zu vermeiden. Insbesondere die an einem Getriebegehäuse angeordneten Austritts- und Eingangsöffnungen von rotierenden Wellen sind dabei besonders gefährdet. So finden an rotierenden Wellen beispielsweise Radial-Wellendichtringe Einsatz, wobei die Wellendichtringe an einem Gehäuseteil eingesetzt, eingepasst oder eingepresst werden und die rotierende Welle von einer am Wellendichring ausgebildeten Dichtlippe abgedichtet wird. Um eine Dichtigkeit zwischen Dichtlippe und rotierender Welle zu gewährleisten, ist ein Federring in Form einer Wurmfeder oder auch Schlauchfeder vorgesehen, der in den Wellendichtring eingepasst ist und eine radiale Anpresskraft in Richtung der rotierenden Welle auf die Dichtungslippe ausübt. Dadurch wird die Lebensdauer des Wellendichtrings erhöht bzw. die durch Verschleiß abnehmende Dichtungswirkung der Dichtlippe verlängert.

Radial-Wellendichtringe werden mit festem Sitz im Gehäuse oder Gehäusedeckel bzw. in einem Dichtungslagersitz eines Getriebes eingebaut. Ihre Dichtlippe läuft auf der Oberfläche der sich drehenden Welle und wird meist von einer Schlauchfeder oder auch Wurmfeder radial auf die Wellenoberfläche gedrückt. Der Radial-Wellendichtring besteht aus einem Elastomerteil, einem Versteifungsring und der bereits genannten Schlauch- bzw. Wurmfeder. Mit der Außenfläche am Elastomerteil des Wellendichtringes wird eine sichere statische Abdichtung am Gehäuse bzw. Gehäusedeckel erzielt und der Radial-Wellendichtring am Gehäuse bzw. Gehäusedeckel fixiert. Der Versteifungsring verleiht dem Radial-Wellendichtring bzw. dem Elastomerteil die erforderliche Stabilität. Durch die Schlauch- bzw. Wurmfeder wird die Dichtlippe zusätzlich vorgespannt, so dass eine radiale Anpressung der Dichtlippe an die rotierende Welle sichergestellt ist. Neben der eigentlichen Dichtlippe, die durch die genannten Federn an die rotierende Welle angepresst wird, kann zudem eine Schutzlippe vorgesehen sein, die Schmutz und Staub von außen zurückhält. Aufgrund des einfachen Aufbaus lässt sich der Wellendichtring üblicherweise problemlos aufziehen beziehungsweise abziehen.

Radial-Wellendichtringe der oben beschriebenen Art sind beispielsweise in den folgenden Dokumenten offenbart.

So beschreibt die DE 102012218099 A1 eine Dichtungsanordnung zur Abdichtung einer Welle gegen ein Medium. Die Dichtungsanordnung weist dabei ein Federelement und einen Wellendichtring mit einer ersten Dichtlippe und einer zweiten Dichtlippe auf. Das Federelement ist dabei ausgeführt, den Wellendichtring gegen die Welle zu drücken. Die zweite Dichtlippe ist dabei in radialer Richtung des Wellendichtrings mit einer geringeren Abmessung als die erste Dichtlippe ausgeführt. Das heißt, der Wellendichtring ist gestuft ausgeführt.

Eine weitere Ausführung eines Wellendichtrings zeigt US 20120104701 A1, wobei eine Dichtung einen ringförmigen Teil mit einer statischen Dichtungsoberfläche umfasst, die mit einem ersten Element in Kontakt steht und aus einem elastomeren Material besteht. Eine ringförmige Lippe übt eine dynamische Abdichtung gegenüber einem zweiten Element aus. Eine Wurmfeder und eine Blattfeder arbeiten zusammen, um die ringförmige Lippe in einer Betriebskonfiguration auf einer Gleitfläche des zweiten Elements zu halten.

Zudem zeigt auch DE 3606994 A1 einen Wellendichtring mit einem radial äußeren statischen Dichtungsteil, der in eine Gehäuseöffnung einpassbar ist. Der radial äußere Dichtungsteil ist zudem durch einen Metallring verstärkt. Ferner weist der Wellendichtring einen inneren Dichtungsteil auf, an dem eine radial nach innen gerichtet Dichtungslippe ausgebildet ist, die mit einer rotierenden Welle zur Abdichtung derselben in Eingriff bringbar. Der innere Dichtungsteil wird durch eine Wurmfeder umgeben, die eine radial nach innen gerichtete Vorspannkraft ausübt und den inneren Dichtungsteil und die daran ausgebildete Dichtungslippe an die Oberfläche der rotierenden Welle drückt.

Weiteren Stand der Technik zeigt DE 21 45 783 A1, in dem eine Fliehkraftkupplung mit Wellendichtanordnungen offenbart wird, oder auch DE 10 2012 107382 A1, in der ein Radialwellendichtring zum Einbau in eine schnell drehende Hohlwelle gezeigt wird.

So auch DE 102015 103921 A1, in der eine Getriebeeinrichtung in Form eines Riementriebsystems zum Antreiben einer Antriebswelle eines zu- und abschaltbaren sowie mit zwei unterschiedlichen Übersetzungsverhältnissen antreibbaren Aggregats gezeigt wird, welches vorzugsweise für eine Erntemaschine zum einsatz kommen soll. Das gezeigte Aggregat weist ein über Antriebsriemenscheiben angetriebenes Treibriemenpaar auf, welches zwei der Antriebswelle zugeordnete, mit unterschiedlichen Durchmessern ausgebildete Abtriebsriemenscheiben antreibt.

Die im Stand der Technik bekannten Ausführungen von Radial-Wellendichtringen eignen sich hauptsächlich für Getriebe mit statischen, also feststehenden Gehäusen, also für Getriebe mit Gehäuseteilen, in die der Wellendichtring eingepasst ist und die nicht in Rotation gebracht werden. Mit anderen Worten, der Wellendichtring selbst unterliegt dann auch keiner Rotation. Bei Getriebegehäusen, die jedoch selbst auch rotieren, stellt sich nunmehr das Problem, dass der Wellendichtring mitrotiert und gewissen Fliehkräften ausgesetzt wird. Durch die Rotationsbewegung des Wellendichtrings und die damit verbundenen Fliehkräfte kann die Vorspannwirkung der Schlauchfeder teilweise kompensiert werden und sich die Schlauchfeder lösen bzw. herausspringen, so dass sich die Dichtlippe von dem abzudichtenden Bauteil lösen kann und die Dichtungsfunktion der Dichtlippe im hohen Maße beeinträchtigt wird oder gar ganz entfällt, da keine Anpresskraft mehr durch die Schlauchfeder auf die Oberfläche der rotierenden Welle ausgeübt wird.

Die der Erfindung zugrunde liegende Aufgabe wird darin gesehen, eine Einrichtung der eingangsgenannten Art anzugeben, die bei einer Getriebeeinrichtung mit rotierbaren Gehäuseteilen Einsatz finden kann, so dass die vorgenannten Probleme überwunden werden.

Die Aufgabe wird erfindungsgemäß durch die Lehre der Patentansprüche 1 gelöst. Weitere vorteilhafte Ausgestaltungen und Weiterbildungen der Erfindung gehen aus den Unteransprüchen hervor.

Erfindungsgemäß wird eine Getriebeeinrichtung mit einer Fixiereinrichtung für einen Wellendichtring der eingangs genannten Art derart ausgebildet, wobei die Getriebeeinrichtung mit einem ersten um eine Rotationsachse rotierbaren Getriebeteil, einem im ersten Getriebeteil ausgeformten Dichtungssitz, einem in dem Dichtungssitz eingepassten Wellendichtring und einem sich durch den ersten Getriebeteil und den Wellendichtring erstreckenden und um die Rotationsachse rotierbaren zweiten Getriebeteil ausgebildet ist. Der erste und der zweite Getriebeteil können ferner relativ zueinander rotierbar angeordnet sein oder aber mit gemeinsamer Drehzahl rotieren. Am Wellendichtring ist eine Dichtlippe ausgebildet, die mit einer Außenfläche des zweiten Getriebeteils in Eingriff steht. Durch ein am Wellendichtring angeordnetes Federelement ist die Dichtlippe vorgespannt, so dass ein zusätzlicher Anpressdruck der Dichtlippe auf die Außenfläche des zweiten Getriebeteils ausgeübt wird. Die Fixiereinrichtung ist in der Getriebeeinrichtung derart angeordnet, dass ein um eine Rotationsachse rotierbarer Haltering vorgesehen ist, der mehrere schwenkbar angeordnete Schwenkkörper aufweist, wobei jeder Schwenkkörper ein Schwenklager aufweist, durch welche sich der Haltering als Schwenkachse erstreckt, wobei jeder der Schwenkkörper einen ersten und zweiten Schwenkarm umfasst, die sich jeweils vom Schwenklager in axial zur Rotationsachse entgegengesetzte Richtungen erstrecken, so dass der Haltering zwischen den jeweiligen Schwenkarmen angeordnet ist und eine Auslenkung der jeweiligen ersten Schwenkarme in eine erste Richtung radial zur Rotationsachse eine Auslenkung der jeweiligen zweiten Schwenkarme in eine der ersten Richtung entgegengesetzten Richtung radial zur Rotationsachse bewirkt. Der zweite Schwenkarm eines jeden Schwenkkörpers schwenkt durch Rotation des Halterings in Richtung des zweiten Getriebeteils bzw. durch Rotation des Halterings wird eine Anpresskraft in Richtung des zweiten Getriebeteils ausgeübt.

Durch die pendelnde Aufhängung der Schwenkkörper auf dem Haltering mit entgegengesetzten axialen Erstreckungen der jeweiligen Schwenkarme, wird gewährleistet, dass eine Auslenkung des jeweiligen einen Schwenkarms in eine Richtung eine Auslenkung des gegenüberliegenden jeweiligen anderen Schwenkarms in die entgegengesetzte Richtung erfolgt. In dem Dichtungssitz des ersten Getriebeteils ist eine Ringnut ausgebildet, in welcher der Haltering der Fixiereinrichtung gelagert ist, wobei der zweite Schwenkarm eines jeden Schwenkkörpers in den Wellendichtring hineinragt und durch Rotation des Halterings mit dem Federelement in Eingriff bringbar ist. Durch die Lagerung in einer Ringnut, wird der Haltering im Bereich des Dichtungssitzes axial fixiert. Die Länge der jeweiligen zweiten Schwenkarme sind vorzugsweise derart bemessen, dass diese auf das Federelement von oben in Richtung der Rotationsachse einwirkt und dieses durch eine Anpresskraft fixiert oder niederhält bzw. niederdrückt. Je mehr Schwenkkörper über dem Umfang des Halterings verteilt angeordnet sind, umso gleichmäßiger wird das Federelement über seinen Umfang belastet und umso gleichmäßiger wird auch die Dichtlippe über ihren Umfang an die Außenfläche des zweiten Getriebeteils gedrückt.

Die Schwenkarme sind derart ausgebildet und dimensioniert, dass das Produkt aus der Masse des ersten Schwenkarms und der Entfernung des Massenschwerpunkts des ersten Schwenkarms zur Schwenkachse größer ist, als das Produkt aus der Masse des zweiten Schwenkarms und der Entfernung des Massenschwerpunkts des zweiten Schwenkarms zur Schwenkachse, so dass eine sich durch Rotation des Halterings um eine Rotationsachse einstellende Fliehkraft die Auslenkung des ersten Schwenkarms radial nach außen zur Rotationsachse bewirkt. Je größer eine Rotationsgeschwindigkeit des Halterings ist, umso größer ist auch die sich einstellende Fliehkraft und die damit verbundene Auslenkung des ersten Schwenkarms radial nach außen und die des zweiten Schwenkarms radial nach innen, bezogen auf die Rotationsachse des Halterings. Somit ist ein Anstieg der Rotationsgeschwindigkeit des Halterings unmittelbar mit einem Anstieg der den zweiten Schwenkarm radial nach innen zur Rotationsachse bewegenden Kraft verbunden, mit der der zweite Schwenkarm auf das Federelement gedrückt bzw. gepresst wird und dieses fixiert. Um eine ausreichend hohe Fliehkraft zu erzeugen, mit der eine resultierende Anpresskraft auf die Dichtlippe bzw. auf die Schlauchfeder generiert wird, sind die Schwenkkörper vorzugsweise aus Metall oder einem anderen gießbaren Werkstoff mit vergleichbar hoher Dichte hergestellt. Alternativ können neben einem Gießverfahren jedoch auch andere Verfahren zur Herstellung der Schwenkkörper geeignet sein. So können diese auch in einem Stanz- oder Schmiedeverfahren hergestellt werden.

Das am Wellendichtring angeordnete Federelement kann als Schlauchfeder, Wurmfeder oder Ringfeder ausgebildet sein, wobei auch andersartige Federelemente einsetzbar sind, die eine radial nach innen zum zweiten Getriebeteil gerichtete Anpresskraft auf die Dichtlippe ausüben. Als Schlauchfeder, Wurmfeder oder Ringfeder wird ein Kreisring aus einer gewickelten Druckfeder bezeichnet, die zu einem Kreis gebogen und an den beiden Enden miteinander verbunden ist. Eine Schlauchfeder erzeugt eine Radialkraft, die zu ihrer Mitte hin gerichtet ist, wenn der Radius der Schlauchfeder zunimmt. Mit anderen Worten, eine Schlauchfeder, Wurmfeder oder Ringfeder ist über den Umfang geschlossen und wirkt ähnlich einem Gummiband.

In dem Dichtungssitz des ersten Getriebeteils sind über den Umfang des Dichtungssitzes verteilte Aussparungen vorgesehen, die derart ausgebildet sind, dass der erste Schwenkarm eines jeden Schwenkkörpers in die Aussparungen hinein bewegbar ist. Die Aussparungen ermöglichen ein Ausschwenken der jeweiligen ersten Schwenkarme radial nach außen. Dabei ragen die Schwenkarme umso mehr in die Aussparungen hinein, je größer die Fliehkraft diesen nach außen drängt. Mit anderen Worten, mit zunehmender Rotationsgeschwindigkeit des Halterings bzw. des ersten Getriebeteils steigt das Maß mit dem die ersten Schwenkarme in die Aussparungen hineinragen. Gleichzeitig steigt damit auch das Maß, mit dem die jeweiligen zweiten Schwenkarme auf das Federelement drücken und dieses zunehmend mit einer Anpresskraft beaufschlagen und fixieren.

Die Getriebeeinrichtung kann als Zahnriemengetriebe ausgebildet und der erste Getriebeteil mit einer ersten Riemenscheibe des Zahnriemengetriebes drehfest verbunden sein. Es können auch andere Getriebeeinrichtungen, in denen Wellendichtringe zum Einsatz kommen mit einer oben genannten Fixiereinrichtung ausgestattet sein, wobei dies von Vorteil ist, wenn die Dichtfunktion der Dichtlippe durch eine Rotation des Wellendichtringes gefährdet ist. So kann bei Rotation des Wellendichtrings der mitrotierende Haltering bzw. die daran angeordneten Schwenkkörper der Fixiereinrichtung für eine Fixierung des Federelements sorgen und eine Anpresskraft auf die Dichtlippe und damit eine zuverlässige Dichtfunktion derselben gewährleistet werden.

Der zweite Getriebeteil kann axial verschiebbar und drehfest mit einer Abtriebswelle des Zahnriemengetriebes verbunden sein. So kann eine drehfeste Verbindung des zweiten Getriebeteils mit einer Abtriebswelle hergestellt werden und eine axiale Verschiebung des zweiten Getriebeteils das Verbinden desselben mit verschiedenen anderen rotierenden Getriebeteilen ermöglichen, beispielsweise mit verschiedenen Zahnradstufen oder unterschiedlich angetriebenen Rotationskörpern. Damit können unterschiedliche Drehzahlen der Abtriebswelle erzielt werden.

Der zweite Getriebeteil kann vorzugsweise durch axiale Verschiebung wahlweise mit der ersten Riemenscheibe oder einer zweiten Riemenscheibe des Zahnriemengetriebes drehfest verbunden werden. Die Riemenscheiben können beispielsweise unterschiedliche Durchmesser aufweisen und beide mit derselben Abtriebswelle in Rotationsverbindung gebracht werden. Wahlweise können dann unterschiedliche Übersetzungsverhältnisse geschaffen und damit unterschiedliche Drehzahlen und Drehmomente an der Abtriebswelle erzielt werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1a: eine schematische Perspektivansicht einer erfindungsgemäßen Fixiereinrichtung,
- Fig. 1b: eine schematische Perspektivansicht eines Halterings der Fixiereinrichtung aus Fig. 1a,
- Fig. 1c: eine schematische Perspektivansicht einer Oberseite eines Schwenkkörpers der Fixiereinrichtung aus Fig. 1a,
- Fig. 1d: eine schematische Perspektivansicht einer Unterseite des Schwenkkörpers aus Fig. 1c,
- Fig. 2a: eine schematische perspektivische Teilquerschnittsansicht eines Wellendichtrings,
- Fig. 2b: eine schematische Perspektivansicht eines Zusammenbaus des Wellendichtrings aus Fig. 2a mit der Fixiereinrichtung aus Fig. 1a,
- Fig. 2c: eine schematische Perspektivansicht eines Zusammenbaus aus Wellendichtring und Fixiereinrichtung aus Fig. 2b in einem beispielhaften Getriebeteil,
- Fig. 3: eine schematische perspektivische Querschnittsansicht eines Segments eines Zusammenbaus aus Wellendichtring und Fixiereinrichtung aus Fig. 2b in einem ersten und einem zweiten Getriebeteil,
- Fig. 4: eine schematische Querschnittsansicht einer Getriebeeinrichtung mit Wellendichtring und Fixiereinrichtung aus Fig. 2b,
- Fig. 5: ein vergrößerter Teil der Querschnittsansicht aus Fig. 4 und
- Fig. 6: eine schematische Perspektivansicht der Getriebeeinrichtung aus Fig. 4.

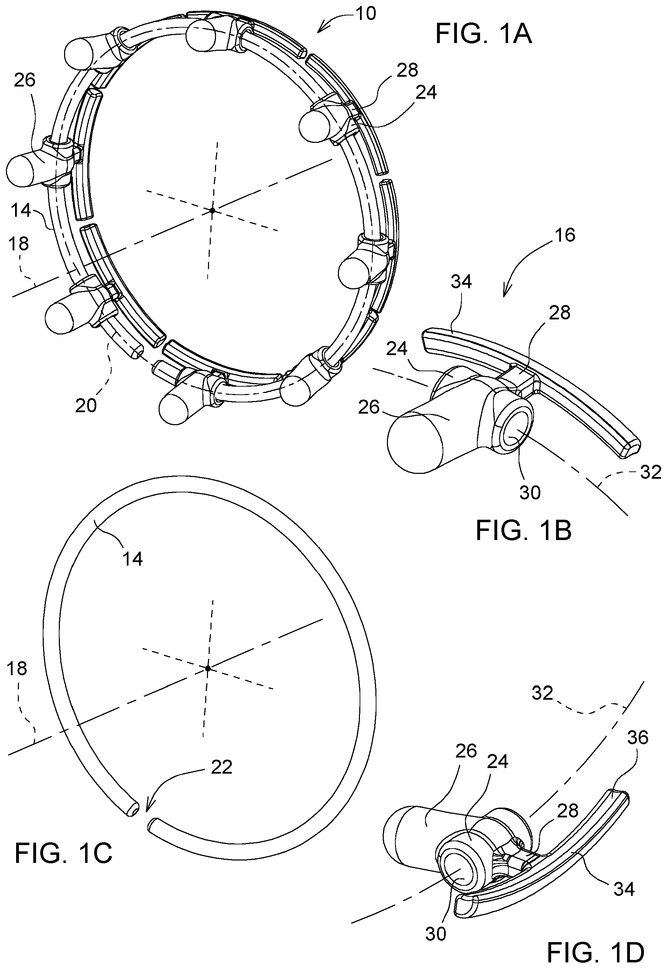

Eine in den Figuren 1a bis 1d dargestellte Fixiereinrichtung 10 für einen Wellendichtring 12 umfasst einen Haltering 14 und mehrere auf den Umfang des Halterings 14 angeordnete Schwenkkörper 16. Der Haltering 14 ist in separater Darstellung in Figur 1b abgebildet und besteht aus einem Rund- oder Kreisprofil (oder auch Draht), dessen Enden um eine Rotationsachse 18 herum zu einem Ring zusammengeführt sind. Der Haltering 14, bildet mit seiner Längsmittelachse eine Schwenkachse 20 für die mehreren Schwenkkörper 16, welche über eine zwischen den Enden des Ringes ausgebildete Öffnung 22 (Figur 1b) in den Haltering 14 eingefügt und auf diesem schwenkbar aufgehängt bzw. schwenkbar gelagert werden, wie insbesondere Figur 1a zeigt. Der Haltering ist rotationssymmetrisch zur Rotationsachse 18 ausgebildet.

Bei dem in Figur 1a dargestellten Ausführungsbeispiel sind acht Schwenkkörper 16 auf dem Haltering 14 über den Umfang verteilt schwenkbar angeordnet, wobei die Anzahl variierbar ist und auch mehr oder weniger Schwenkkörper 16 über den Umfang verteilt angeordnet sein können. Wie genauer im Detail in den Figuren 1c und 1d gezeigt ist, umfasst jeder Schwenkkörper 16 ein Schwenklager 24, einen ersten Schwenkarm 26 und einen zweiten Schwenkarm 28. Das Schwenklager 24 umfasst eine Durchgangsöffnung 30 mit kreisrundem Querschnitt und einem entsprechend dem Durchmesser des Halterings 14 bemessenen Durchmesser und bogenförmigen Längsverlauf, so dass eine sich durch das Schwenklager 24 erstreckende Mittellinie 32 einen Kreisbogen des Halterings 14 abbildet. Ausgehend von dem Schwenklager 24 erstrecken sich in eine erste Richtung zur Rotationsachse 18 der erste Schwenkarm 26 und in eine entgegengesetzte zweite Richtung zur Rotationsachse 18 der zweite Schwenkarm 28. Der erste Schwenkarm 26 ist als zylinderförmige Erstreckung ausgebildet. Der zweite Schwenkarm 28 ist als t-förmige Erstreckung ausgebildet. Der erste und zweite Schwenkarm 26, 28 sind derart ausgelegt, dass das Produkt des Abstands des Masseschwerpunktes des ersten Schwenkarms 26 zur Schwenkachse 20 am Haltering 14 und der Masse des ersten Schwenkarms 26 größer ist, als das Produkt des Abstands des Masseschwerpunktes des zweiten Schwenkarms 28 zur Schwenkachse 20 am Haltering 14 und der Masse des zweiten Schwenkarms 28. Somit wird gewährleistet, dass bei einer Rotation des Halterings 14 um die Rotationsachse 18 das durch die Fliehkraft des ersten Schwenkarmes 26 erzeugte Drehmoment um die Schwenkachse 20 größer ist als das durch die Fliehkraft des zweiten Schwenkarms 28 erzeugte Drehmoment, so dass der erste Schwenkarm 26 radial zur Rotationsachse 18 nach außen und der zweite Schwenkarm 28 radial zur Rotationsachse nach innen bewegt bzw. gedrängt werden. Der zweite Schwenkarm 28 weist einen parallel entlang zur Schwenkachse 20 bzw. zur Mittellinie 32 ausgebildeten Schwenkarmteil 34, mit bogenförmigem Verlauf auf, wobei des Weiteren auf der der Rotationsachse 18 zugewandten Seite des Schwenkarmteils 34 eine Haltenut 36 ausgebildet ist, wie in Figur 1d zu erkennen ist.

Die Schwenkkörper 16 sind vorzugsweise aus Metall hergestellt, insbesondere aus einem Gusseisenmaterial. Je höher die Dichte des Materials gewählt wird, umso stärker kann die Hebelwirkung der Schwenkkörper 16 ausfallen und damit auch eine Fixierwirkung der Fixiereinrichtung.

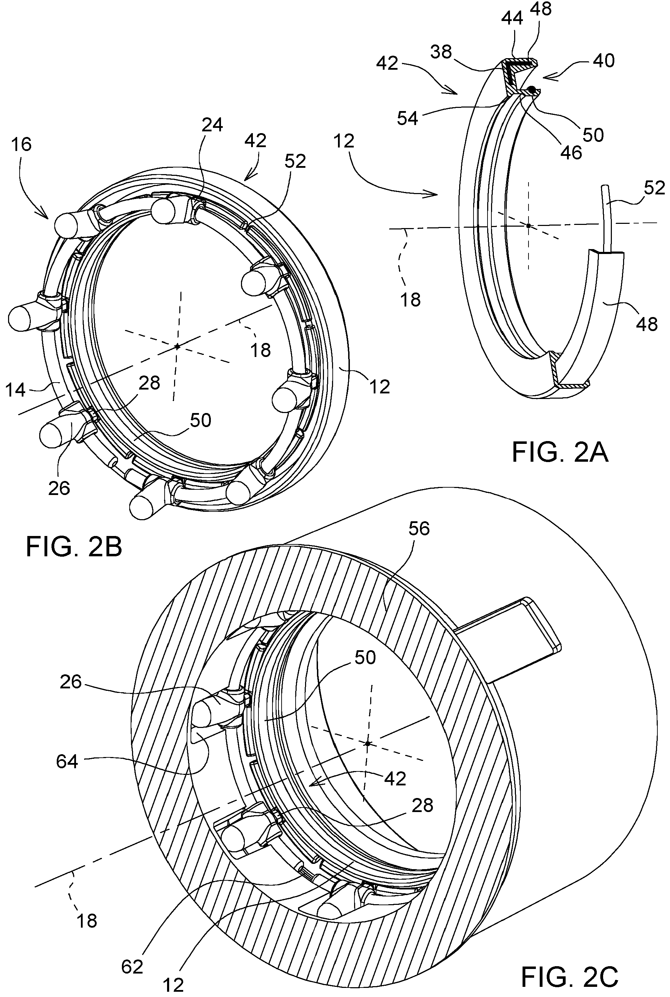

In der Figur 2a ist ein herkömmlicher Wellendichring 12 dargestellt, wie er in dem hier beschriebenen Ausführungsbeispiel zum Einsatz kommt. Ein derartiger Wellendichtring 12 umfasst einen ringförmigen Elastomerteil 38, der als U-Profil ausgebildet ist und um eine Rotationsachse 18 herum zu einem Ring geformt ist. Dabei weist eine offene Seite 40 des U-Profils in eine axiale Richtung und eine geschlossene Seite 42 des U-Profils in die entsprechend andere axiale Richtung der Rotationsachse 18, so dass sich ein gegenüber der Rotationsachse 18 äußerer Schenkel 44 und eine innerer Schenkel 46 des U-Profils ergibt. Der Elastomerteil 38 ist im Bereich des äußeren Schenkels 44 und der geschlossenen Seite 42 des U-Profils mit einem ebenfalls ringförmigen Versteifungsteil 48 ausgebildet, der in den Elastomerteil 38 eingefasst ist und dem Wellendichtring 12 eine entsprechende Stabilität und Steifigkeit verschafft. Auf der zur Rotationsachse 18 zugewandten Seite des inneren Schenkels 46 ist eine ringförmige Dichtlippe 50 in Form einer ringförmigen, radial zur Rotationsachse 18 gerichteten Erhebung ausgebildet. Auf der zur Rotationsachse 18 abgewandten Seite des inneren Schenkels 46 an axial zur Rotationsachse 18 gleicher Stelle ist eine Ringnut in der ein Federelement 52 in Form einer Schlauchfeder (auch Ring- oder Wurmfeder) eingebettet ist. Das Federelement 52 bewirkt, dass die Dichtlippe 50 radial in Richtung der Rotationsachse 18 vorgespannt wird. An einem Übergangsbereich zwischen der geschlossenen Seite 42 und des inneren Schenkels 46 des U-Profils ist zudem eine Schutzlippe 54 ausgebildet, die sich ringförmig schräg sowohl axial in Richtung der geschlossenen Seite 42 des U-Profils als auch radial in Richtung Rotationsachse 18 erstreckt.

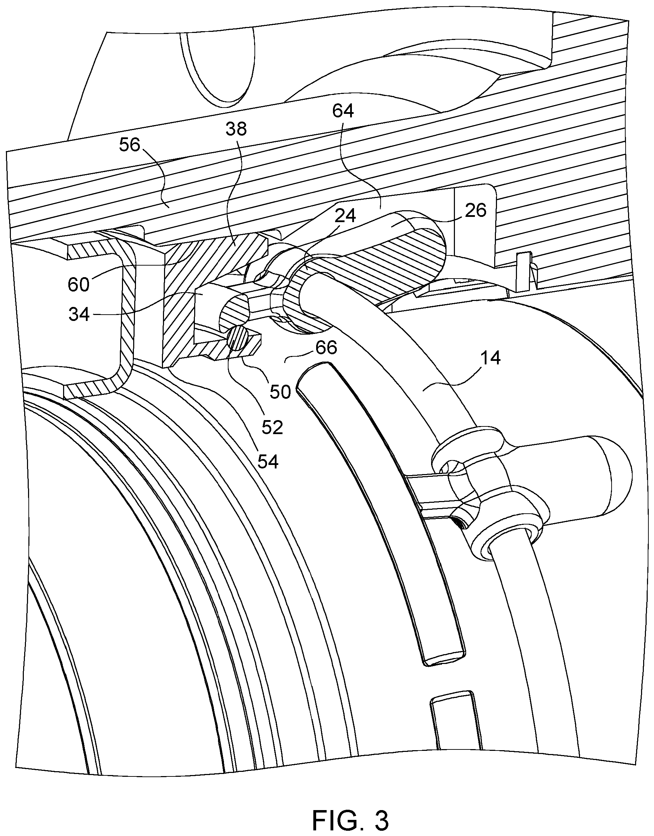

In den Figuren 2b und 2c ist dargestellt, wie die oben beschriebene Fixiereinrichtung 10 mit einem handelsüblichen und herkömmlichen Wellendichtring 12 gemäß Figur 2a zusammenwirkt. Dazu wird die Fixiereinrichtung 10 und der Wellendichtring 12 in ein abzudichtendes erstes Getriebeteil 56 einer Getriebeeinrichtung 58, die weiter unten genauer beschrieben wird, eingesetzt bzw. eingepasst. Wie besonders gut in Figur 3 zu sehen ist, ist im ersten Getriebeteil 56 ein Dichtungssitze 60 ausgebildet, in welchem der abdichtende Wellendichtring 12 eingepasst und aufgenommen wird. Im Anschluss an den Dichtungssitz 60 ist im ersten Getriebeteil 56 eine Halteringnut 62 ausgebildet, in welche der Haltering 14 der Fixiereinrichtung 10 eingesetzt wird bzw. fixiert ist. Entsprechend einer Anzahl und Position der an der Fixiereinrichtung 10 vorgesehenen Schwenkkörper 16 sind auf gleicher axialer Position zur Rotationsachse 18 am ersten Getriebeteil 56 Ausnehmungen 64 ausgebildet, die sich zur Rotationsachse 18 radial nach außen und axial ins Getriebeeinrichtungsinnere erstrecken. Die Ausnehmungen 64 sind derart dimensioniert, dass für die Schwenkkörper 16 der Fixiereinrichtung 10 Platz und Schwenkraum geschaffen wird, so dass diese zum einen frei verschwenkbar sind und zum anderen, die Fixierung des Halterings 14 in der Halteringnut 62 ermöglicht wird. Zur Abdichtung der Getriebeeinrichtung 58 bzw. eines rotierbaren ersten Getriebeteils 56 und eines darin gelagerten zweiten rotierbaren Getriebeteils 66 der Getriebeeinrichtung 58, siehe dazu auch Figuren 3 bis 6, wird zunächst die Fixiereinrichtung 10 mit den ersten Schwenkarmen 26 vorweg (in den inneren Bereich der Getriebeeinrichtung weisend), eingesetzt, so dass der Haltering 14 in die Halteringnut 62 eingebettet wird. Dadurch wird die Fixiereinrichtung 10 und damit die Schwenkkörper 16 im ersten Getriebeteil 56 fixiert und die Schwenkkörper 16 in den im ersten Getriebeteil 56 ausgebildeten Ausnehmungen 64 frei verschwenkbar aufgenommen. Danach kann der Wellendichtring 12 in den Dichtungssitz 60 eingesetzt bzw. eingepasst werden, wobei die zweiten Schwenkarme 28 der Fixiereinrichtung 10 an der offenen Seite 40 des Wellendichtrings 12 in das Innere des Wellendichtrings 12 hineinragen, so dass die zweiten Schwenkarme 28 mit ihren Schwenkarmteilen 34 und den darauf ausgebildeten Haltenuten 36 auf das Federelement 52 eingreifen und dieses anpressen und fixieren, was besonders deutlich in Figur 2b und Figur 3 zu erkennen ist. Die Schutzlippe 54 ist dabei so bemessen, dass diese einen Ringspalt zwischen Elastomerteil 38 und zweitem Getriebeteil 66 gegen eindringende Schmutzpartikel von außen abdichtet.

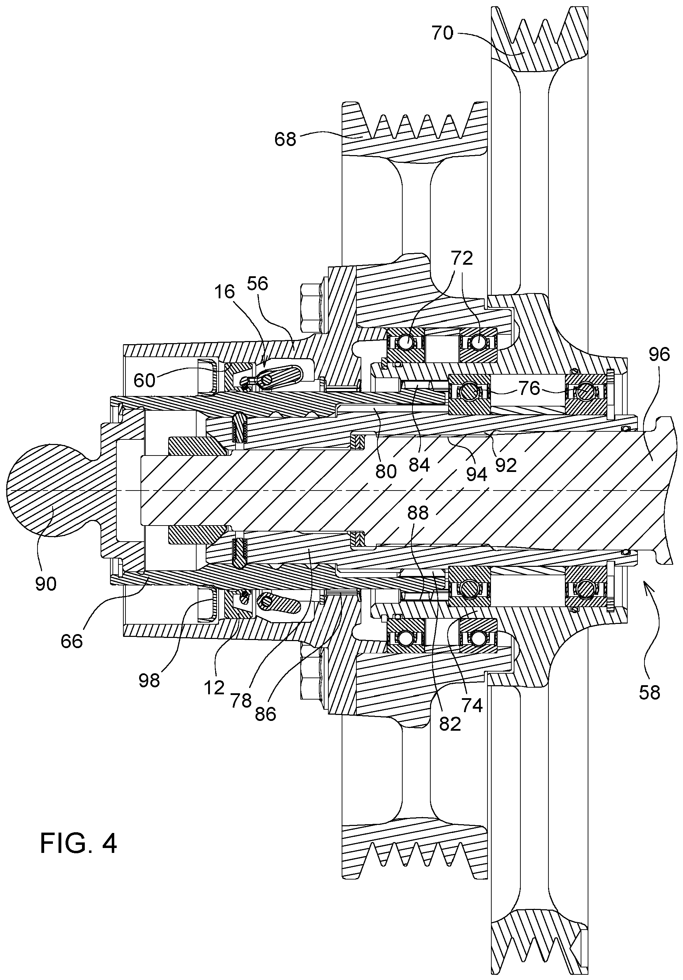

In den Figuren 4 bis 6 ist die Getriebeeinrichtung 58 mit Wellendichtring 12 und Fixiereinrichtung 10 zur Abdichtung des rotierbaren ersten Getriebeteils 56 gegenüber dem ebenfalls rotierbaren zweiten Getriebeteils 66 im Detail dargestellt. Die Fixiereinrichtung 10 sowie der Wellendichtring 12 sind wie oben bereits beschrieben im ersten Getriebeteil 56 angeordnet. Die Getriebeeinrichtung 58 ist in diesem Beispiel als Teil eines nicht gezeigten Zahnriemengetriebes ausgebildet und umfasst eine erste Riemenscheibe 68 und eine zweite Riemenscheibe 70 als Antriebskörper, wobei die erste und die zweite Riemenscheibe 68, 70 jeweils durch einen nicht gezeigten Riemen des Zahnriemengetriebes angetrieben bzw. in Rotation gebracht werden.

Der erste Getriebeteil 56 ist drehfest mit der ersten Riemenscheibe 68 verbunden. Die erste Riemenscheibe 68 ist über einen Kugellagersatz 72 rotierbar und axial fixiert auf einem an der zweiten Riemenscheibe 70 ausgebildeten Lagerflansch 74 gelagert. Die zweite Getriebescheibe 70 ist über einen weiteren Kugellagersatz 76 rotierbar und axial fixiert auf einer Abtriebswelle 78 gelagert. Der zweite Getriebeteil 66 ist auf einer an der Abtriebswelle 78 ausgebildeten Außenverzahnung 80 axial verschiebbar gelagert, wobei der zweite Getriebeteil 66 als Schaltnabe oder Schalthülse mit einer Innenverzahnung 82 und einer Außenverzahnung 84 versehen. Die Innenverzahnung 82 des zweiten Getriebeteils 66 ist komplementär zu der Außenverzahnung 80 an der Abtriebswelle 78 ausgebildet, so dass eine drehfeste Verbindung und eine axiale Verschiebbarkeit gewährleistet ist. Sowohl am ersten Getriebeteil 56 als auch an der zweiten Riemenscheibe 70 ist jeweils eine Innenverzahnung 86, 88 ausgebildet, wobei die Innenverzahnung 86 am ersten Getriebeteil 56 als auch die Innenverzahnung 88 an der zweiten Riemenscheibe 70 wahlweise durch axiales Verschieben des zweiten Getriebeteils 56 mit der am zweiten Getriebeteil 66 ausgebildeten Außenverzahnung 84 in Rotationsverbindung gebracht werden kann und dadurch wahlweise eine Antriebsverbindung zwischen erster Riemenscheibe 68 und Abtriebswelle 78 oder zweiter Riemenscheibe 70 und Abtriebswelle 78 hergestellt werden kann. Zudem ist der axiale Abstand zwischen der Innenverzahnung 86 am ersten Getriebeteil 56 und Innenverzahnung 88 an der Riemenscheibe derart gewählt, dass der zweite Getriebeteil 66 durch axiales Verschieben in eine Zwischenstellung verbracht werden kann, in der die Außenverzahnung 84 am ersten Getriebeteil 56 zwischen die beiden Innenverzahnungen 86 und 88 positioniert werden kann, so dass durch die Zwischenstellung ein Leerlauf erzielt werden kann, in der weder der erste Getriebeteil 56 noch die zweite Riemenscheibe 70 in Rotationsverbindung mit der Antriebswelle 78 steht. An einem aus der Getriebeeinrichtung 58 herausragenden Ende des zweiten Getriebeteils 56 ist ein Stellknauf 90 ausgebildet, mittels welchem ein manuelles axiales Verschieben des zweiten Getriebeteils 66 eingeleitet werden kann, wobei durch axiales Verschieben des zweiten Getriebeteils wahlweise zwischen einer Schaltstellung zur Verbindung mit der ersten Riemenscheibe 68, zur Verbindung mit der zweiten Riemenscheibe 70 oder zum Leerlauf gewählt werden kann.

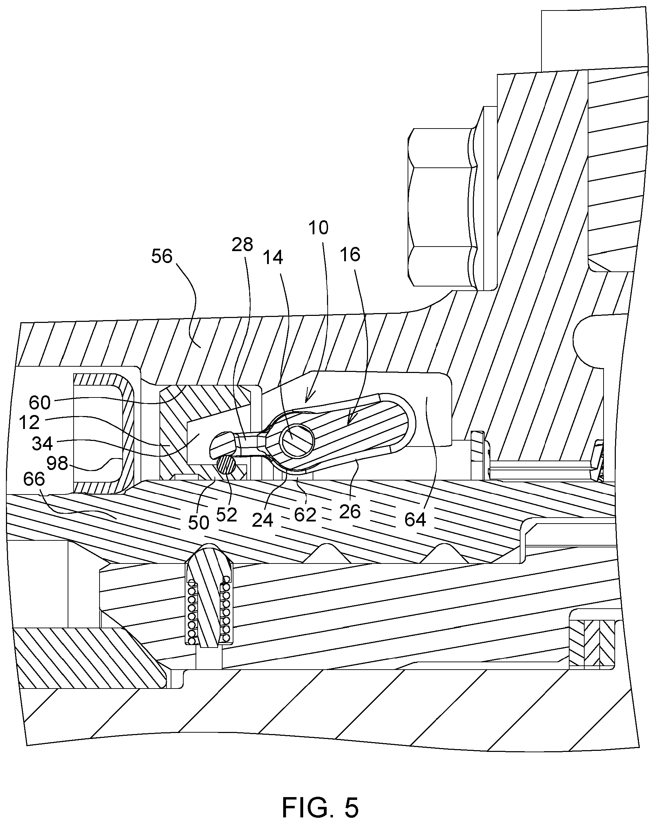

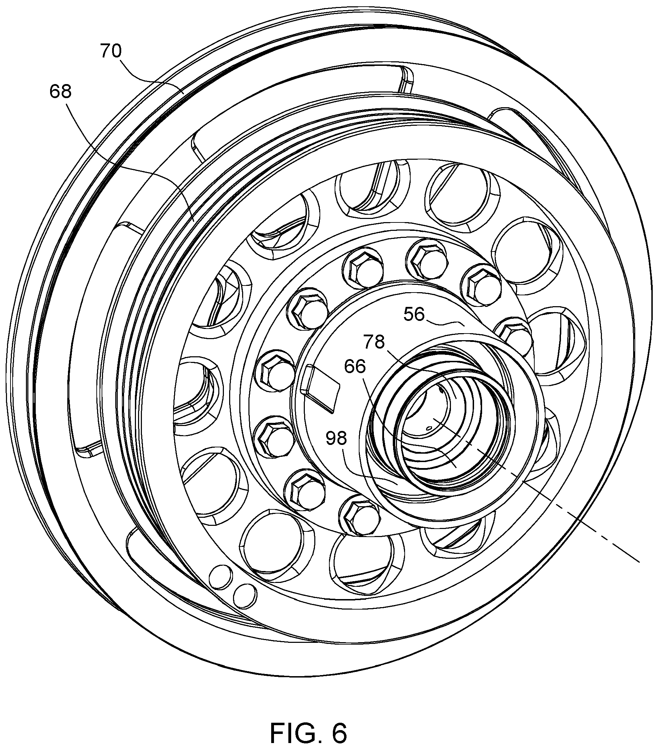

Die Abtriebswelle 78 ist als Hohlwelle mit einer weiteren Innenverzahnung 92 ausgebildet und steht wiederum im Eingriff mit einer weiteren Außenverzahnung 94, die an einer Antriebswelle 96 einer durch die Getriebeeinrichtung 58 anzutreibenden Gerätschaft oder Einrichtung (nicht gezeigt) ausgebildet ist, beispielsweise einer Häcksel-, Schneid-, Gebläse- oder auch Fördereinrichtung, welche mit verschiedenen Drehzahlen anzutreiben sind. Letzteres wird dadurch erzielt, dass die Riemenscheiben 68, 70 mit unterschiedlichen Durchmessern ausgebildet sind, wodurch unterschiedliche Übersetzungen erzielt werden. Ferner ist die Getriebeeinrichtung 58 mit einer schmutzabweisenden Dichtmanschette 98 versehen, die an der Getriebeöffnung auf das zweite Getriebeteil 66 aufgesetzt wird und den Wellendichtring 12 zusätzlich abdeckt und gegen Verschmutzung von außen schützt (siehe insbesondere Figuren 5 und 6).

Die Fixiereinrichtung 10 für den Wellendichtring 12 kommt insbesondere dann zum Tragen, sobald durch Antreiben der ersten Riemenscheibe 68 der erste Getriebeteil 56 und damit auch der Wellendichtring 12 in Rotation gebracht wird. Durch Rotation wird der Wellendichtring 12 gewissen Fliehkräften ausgesetzt und es besteht die Gefahr, dass sich das im Wellendichtring 12 angeordnete Federelement 52, welches eine Anpresskraft auf die Dichtlippe 50 ausübt und eine gewisse Dichtigkeit zwischen Dichtlippe und zweitem Getriebeteil 66 sicherstellt, ablöst bzw. die Anpresskraft des Federelements 52 durch die Wirkung der Fliehkräfte vermindert wird. Die an der Fixiereinrichtung 10 ausgebildeten Schwenkkörper 16 sorgen für eine mit zunehmender Fliehkraft ansteigende Anpresskraft bzw. Fixierung am Federelement 10, wobei die durch die Fliehkraft in die Ausnehmungen 64 nach außen geschwenkten ersten Schwenkarme 26 ein Verschwenken der zweiten Schwenkarme 28 bzw. der an den zweiten Schwenkarmen 28 ausgebildeten Schwenkarmteilen 34 ein Anpressen und Fixieren des Federelements bewirken. Somit wird auch bei hoher Drehzahl ein sich Lösen des Federelements bzw. eine Abnahme der Anpresskraft an der Dichtlippe 50 vermieden.

## Patentansprüche

1. Getriebeeinrichtung (58) mit einem ersten um eine Rotationsachse (18) rotierbaren Getriebeteil (56), einem im ersten Getriebeteil (56) ausgeformten Dichtungssitz (60), einem in dem Dichtungssitz (60) eingepassten Wellendichtring (12) und einem sich durch den ersten Getriebeteil (56) und den Wellendichtring (12) erstreckenden und um die Rotationsachse (18) rotierbaren zweiten Getriebeteil (66),
wobei am Wellendichtring (12) eine Dichtlippe (50) ausgebildet ist, die mit einer Außenfläche des zweiten Getriebeteils (66) in Eingriff steht und durch ein am Wellendichtring (12) angeordnetes Federelement (52) vorgespannt ist,
ferner eine Fixiereinrichtung (10) für den Wellendichtring (12) vorgesehen ist, mit einem um eine Rotationsachse (18) rotierbaren Haltering (14) und mehreren am Haltering (14) schwenkbar angeordneten Schwenkkörpern (16), wobei jeder Schwenkkörper (16) ein Schwenklager (24) aufweist, durch welche sich der Haltering (14) als Schwenkachse (32) erstreckt, wobei jeder der Schwenkkörper (16) einen ersten und zweiten Schwenkarm (26, 28) umfasst, die sich jeweils von dem Schwenklager (24) in axial zur Rotationsachse (18) entgegengesetzte Richtungen erstrecken, so dass der Haltering (14) zwischen den Schwenkarmen (26, 28) angeordnet ist und eine Auslenkung des ersten Schwenkarms (26) in eine erste Richtung radial zur Rotationsachse (18) eine Auslenkung des zweiten Schwenkarms (28) in eine der ersten Richtung entgegengesetzten Richtung radial zur Rotationsachse (18) bewirkt,
wobei der zweite Schwenkarm (28) eines jeden Schwenkkörpers (16) durch Rotation des Halterings (14) eine Anpresskraft in Richtung des zweiten Getriebeteils (66) ausübt, **dadurch gekennzeichnet, dass**
in dem Dichtungssitz (60) des ersten Getriebeteils (56) eine Ringnut (62) ausgebildet ist, in welcher der Haltering (14) der Fixiereinrichtung (10) derart gelagert ist, dass der zweite Schwenkarm eines jeden Schwenkkörpers (16) in den Wellendichtring (12) hineinragt und durch Rotation des Halterings (14) mit dem Federelement (52) in Eingriff bringbar ist, derart dass der jeweilige zweite Schwenkarm (28) auf das Federelement (52) drückt und dieses mit einer Anpresskraft beaufschlagt und fixiert.

2. Getriebeeinrichtung (58) nach Anspruch 1, wobei das Produkt aus der Masse des ersten Schwenkarms (26) und der Entfernung des Massenschwerpunkts des ersten Schwenkarms (26) zur Schwenkachse (32) größer ist, als das Produkt aus der Masse des zweiten Schwenkarms (28) und der Entfernung des Massenschwerpunkts des zweiten Schwenkarms (28) zur Schwenkachse (32), so dass eine sich durch Rotation des Halterings (14) um eine Rotationsachse (18) einstellende Fliehkraft die Auslenkung des ersten Schwenkarms (26) radial nach außen zur Rotationsachse (18) bewirkt.

3. Getriebeeinrichtung (58) nach Anspruch 1 oder 2, wobei das am Wellendichtring (12) angeordnete Federelement (52) als Schlauchfeder oder Wurmfeder ausgebildet ist.

4. Getriebeeinrichtung (58) nach einem der Ansprüche 1 bis 3, wobei in dem Dichtungssitz (60) des ersten Getriebeteils (56) über den Umfang des Dichtungssitzes (60) verteilte Aussparungen (64) ausgebildet sind, derart dass der erste Schwenkarm (26) eines jeden Schwenkkörpers (16) in die Aussparungen (64) hinein bewegbar ist.

5. Getriebeeinrichtung (58) nach einem der Ansprüche 1 bis 4, wobei die Getriebeeinrichtung (58) als Zahnriemengetriebe ausgebildet und der erste Getriebeteil (56) mit einer ersten Riemenscheibe (68) des Zahnriemengetriebes drehfest verbunden ist.

6. Getriebeeinrichtung (58) nach Anspruch 5, wobei der zweite Getriebeteil (66) axial verschiebbar und drehfest mit einer Abtriebswelle (78) des Zahnriemengetriebes verbunden ist.

7. Getriebeeinrichtung (58) nach Anspruch 6, wobei der zweite Getriebeteil (66) durch axiale Verschiebung wahlweise mit der ersten Riemenscheibe (68) oder einer zweiten Riemenscheibe (70) des Zahnriemengetriebes drehfest verbindbar ist

## Claims

1. Transmission device (58) having a first transmission part (56) which is rotatable about an axis of rotation (18), a sealing seat (60) formed in the first transmission part (56), a shaft sealing ring (12) fitted in the sealing seat (60) and a second transmission part (66) which extends through the first transmission part (56) and the shaft sealing ring (12) and is rotatable about the axis of rotation (18),
a sealing lip (50) being formed on the shaft sealing ring (12), said sealing lip engaging with an outer surface of the second transmission part (66) and being pretensioned by a spring element (52) arranged on the shaft sealing ring (12),
furthermore, a fixing device (10) for the shaft sealing ring (12) being provided, having a retaining ring (14) which is rotatable about an axis of rotation (18) and a plurality of pivot bodies (16) arranged pivotably on the retaining ring (14), wherein each pivot body (16) has a pivot bearing (24) through which the retaining ring (14) extends as a pivot axis (32), wherein each of the pivot bodies (16) comprises a first and second pivot arm (26, 28) which each extend from the pivot bearing (24) in opposite directions axially with respect to the axis of rotation (18) such that the retaining ring (14) is arranged between the pivot arms (26, 28) and a deflection of the first pivot arm (26) in a first direction radially with respect to the axis of rotation (18) causes a deflection of the second pivot arm (28) in a direction opposite to the first direction radially with respect to the axis of rotation (18),
wherein, by rotation of the retaining ring (14), the second pivot arm (28) of each pivot body (16) exerts a contact force in the direction of the second transmission part (66), **characterized in that**
an annular groove (62) is formed in the sealing seat (60) of the first transmission part (56), in which annular groove the retaining ring (14) of the fixing device (10) is mounted in such a manner that the second pivot arm of each pivot body (16) protrudes into the shaft sealing ring (12) and can be brought into engagement with the spring element (52) by rotation of the retaining ring (14) in such a manner that the respective second pivot arm (28) presses against the spring element (52) and acts upon and fixes the latter with a contact pressure force.

2. Transmission device (58) according to Claim 1, wherein the product of the mass of the first pivot arm (26) and the distance of the mass centre of gravity of the first pivot arm (26) from the pivot axis (32) is greater than the product of the mass of the second pivot arm (28) and the distance of the mass centre of gravity of the second pivot arm (28) from the pivot axis (32), and therefore a centrifugal force arising by rotation of the retaining ring (14) about an axis of rotation (18) causes the first pivot arm (26) to be deflected radially outwards with respect to the axis of rotation (18).

3. Transmission device (58) according to Claim 1 or 2, wherein the spring element (52) arranged on the shaft sealing ring (12) is designed as a tube spring or worm spring.

4. Transmission device (58) according to any one of Claims 1 to 3, wherein recesses (64) distributed over the circumference of the sealing seat (60) are formed in the sealing seat (60) of the first transmission part (56) in such a manner that the first pivot arm (26) of each pivot body (16) is movable into the recesses (64).

5. Transmission device (58) according to any one of Claims 1 to 4, wherein the transmission device (58) is designed as a toothed belt transmission and the first transmission part (56) is connected to a first belt pulley (68) of the toothed belt transmission for rotation therewith.

6. Transmission device (58) according to Claim 5, wherein the second transmission part (66) is connected to an output shaft (78) of the toothed belt transmission in an axially displaceable manner and for rotation therewith.

7. Transmission device (58) according to Claim 6, wherein the second transmission part (66) is connectable by axial displacement either to the first belt pulley (68) or to a second belt pulley (70) of the toothed belt transmission for rotation therewith.

## Revendications

1. Dispositif de transmission (58) avec une première partie de transmission (56) pouvant tourner autour d'un axe de rotation (18), un siège d'étanchéité (60) formé dans la première partie de transmission (56), une bague d'étanchéité d'arbre (12) insérée de manière ajustée dans le siège d'étanchéité (60) et une deuxième partie de transmission (66) s'étendant à travers la première partie de transmission (56) et la bague d'étanchéité d'arbre (12) et pouvant tourner autour de l'axe de rotation (18), une lèvre d'étanchéité (50) est formée sur la bague d'étanchéité d'arbre (12), laquelle est en prise avec une surface extérieure de la deuxième partie de transmission (66) et est précontrainte par un élément de ressort (52) disposé sur la bague d'étanchéité d'arbre (12),
un dispositif de fixation (10) étant prévu en outre pour la bague d'étanchéité d'arbre (12), avec une bague de retenue (14) pouvant tourner autour d'un axe de rotation (18) et plusieurs corps pivotants (16) disposés de manière à pouvoir pivoter sur la bague de retenue (14), chaque corps pivotant (16) comportant un palier pivotant (24) à travers lequel la bague de retenue (14) s'étend en tant qu'axe de pivotement (32), chacun des corps pivotants (16) comprenant un premier et un deuxième bras pivotant (26, 28) qui s'étendent chacun depuis le palier pivotant (24) dans des directions axialement opposées à l'axe de rotation (18), de telle sorte que la bague de retenue (14) est disposée entre les bras pivotants (26, 28) et une déviation du premier bras pivotant (26) dans une première direction radialement à l'axe de rotation (18) entraîne une déviation du deuxième bras pivotant (28) dans une direction opposée à la première direction radialement à l'axe de rotation (18),
le deuxième bras pivotant (28) de chaque corps pivotant (16) exerçant par rotation de la bague de retenue (14) une force de contact en direction de la deuxième partie de transmission (66), **caractérisé en ce que**
est réalisée dans le siège d'étanchéité (60) de la première partie de transmission (56) une rainure annulaire (62), dans laquelle la bague de retenue (14) du dispositif de fixation (10) est montée de telle manière que le deuxième bras pivotant de chaque corps pivotant (16) fait saillie dans la bague d'étanchéité d'arbre (12) et peut être amené en prise avec l'élément de ressort (52) par rotation de la bague de retenue (14) de telle manière que le deuxième bras pivotant (28) respectivement appuie sur l'élément de ressort (52) et soumet celui-ci à l'action d'une force de contact et le fixe.

2. Dispositif de transmission (58) selon la revendication 1, le produit de la masse du premier bras pivotant (26) et de la distance entre le centre de gravité du premier bras pivotant (26) et l'axe de pivotement (32) étant supérieur au produit de la masse du deuxième bras pivotant (28) et de la distance entre le centre de gravité du deuxième bras pivotant (28) et l'axe de pivotement (32), de telle sorte qu'une force centrifuge réglée par rotation de la bague de retenue (14) autour d'un axe de rotation (18) entraîne la déviation du premier bras pivotant (26) radialement vers l'extérieur par rapport à l'axe de rotation (18).

3. Dispositif de transmission (58) selon la revendication 1 ou 2, l'élément de ressort (52) disposé sur la bague d'étanchéité d'arbre (12) étant formé comme un ressort tubulaire ou un ressort à boudin.

4. Dispositif de transmission (58) selon l'une des revendications 1 à 3, des évidements (64) répartis sur la périphérique du siège d'étanchéité (60) étant formés dans le siège d'étanchéité (60) de la première partie de transmission (56) de telle manière que le premier bras pivotant (26) de chaque corps pivotant (16) peut être déplacé dans les évidements (64).

5. Dispositif de transmission (58) selon l'une des revendications 1 à 4, le dispositif de transmission (58) étant formé comme une transmission à courroie dentée et la première partie de transmission (56) étant reliée de manière solidaire en rotation à une première poulie (68) de la transmission à courroie dentée.

6. Dispositif de transmission (58) selon la revendication 5, la deuxième partie de transmission (66) pouvant être coulissée axialement et étant reliée de manière solidaire en rotation à un arbre de sortie (78) de la transmission à courroie dentée.

7. Dispositif de transmission (58) selon la revendication 6, la deuxième partie de transmission (66) pouvant être reliée de manière solidaire en rotation au choix à la première poulie (68) ou à une deuxième poulie (70) de la transmission à courroie dentée par coulissement axial.
